# EUROPÄISCHE PATENTSCHRIFT

(11) **EP 1 454 150 B1**
(45) Veröffentlichungstag und Bekanntmachung des Hinweises auf die Patenterteilung: **26.10.2005**
(21) Anmeldenummer: 02796619.1
(22) Anmeldetag: 12.12.2002
(51) Int. Cl.: G01R 13/00, H04L 27/22, G09G 5/36

(54) **VERFAHREN UND ANORDNUNG ZUM GRAPHISCHEN DARSTELLEN DER I- UND/ODER Q- KOMPONENTEN VON DIGITAL MODULIERTEN HOCHFREQUENZSIGNALEN**
METHOD AND DEVICE FOR GRAPHICALLY REPRESENTING THE I AND/OR Q COMPONENTS OF DIGITALLY MODULATED HIGH FREQUENCY SIGNALS
PROCEDE ET DISPOSITIF DE REPRESENTATION GRAPHIQUE DES COMPOSANTES I ET/OU Q DE SIGNAUX HAUTE FREQUENCE MODULES DE FACON NUMERIQUE

(30) Priorität: 14.12.2001 DE 10161602
(43) Veröffentlichungstag der Anmeldung: 08.09.2004
(73) Patentinhaber: Rohde & Schwarz GmbH & Co. KG, 81671 München (DE)
(72) Erfinder: BALZ, Christoph, 81543 München (DE)
(74) Vertreter: Körfer, Thomas
(86) Internationale Anmeldenummer: PCT/EP2002/014158
(87) Internationale Veröffentlichungsnummer: WO 2003/052430

(56) Entgegenhaltungen:
- EP-A- 0 687 074
- EP-A- 1 079 577
- DE-A- 19 851 093
- US-A- 5 379 323
- US-B1- 6 324 224

## Beschreibung

Die Erfindung betrifft ein Verfahren zum graphischen Darstellen der I- und/oder Q-Komponenten von digital modulierten Hochfrequenzsignalen wie quadraturamplitudenmodulierten (QAM) Signalen oder restseitenbandmodulierten (VSB) Signalen sowie eine Anordnung zum Ausführen dieses Verfahrens.

Für die Beurteilung und Überwachung moderner Kommunikationssysteme ist es erforderlich, die hierbei verwendeten digital modulierten Hochfrequenzsignale meßtechnisch zu erfassen. Solche digital modulierten Hochfrequenzsignale sind über das I/Q-Konstellationsdiagramm beschrieben. So ist es beispielsweise aus der DE 195 47 896 A1 bekannt, das Konstellationsdiagramm solcher digitaler Modulationen höherer Ordnung, beispielsweise 64 QAM, unmittelbar für den Betrachter auf einem Bildschirm graphisch darzustellen.

Es ist auch schon bekannt, die zeitlich nacheinander im I/Q-Demodulator eines Empfängers gemessenen I/Q-Komponenten entweder gesondert oder ggf. auch gemeinsam gleichzeitig so überlagert auf dem Bildschirm graphisch darzustellen, daß der Abstand der die einzelnen Symbole im Konstellationsdiagramm repräsentierenden Wertewolken als sogenanntes "Eye Diagramm" am Bildschirm erscheint. Die so dargestellte sogenannte Augenöffnung ist ein Maß für die Güte der digitalen Modulation und die Signalübertragung.

Ein Nachteil dieser bekannten Darstellungsarten ist, daß sie keine ausreichende Information über den zeitlichen Verlauf evtl. vorhandener Störungen liefern, also beispielsweise über periodisch auftretende Störimpulse. Außerdem wird bei dem bekannten Darstellungsverfahren nur ein kleiner Teil der tatsächlich vorhandenen I/Q-Daten zur Anzeige gebracht, die innerhalb eines kurzen Zeitfensters aufgenommen und am Bildschirm dargestellt werden. Zahlreiche Meßwerte werden überhaupt nicht erfaßt und es entstehen große Darstellungslücken.

Es ist daher Aufgabe der Erfindung, ein Verfahren zum graphischen Darstellen der I/Q-Komponenten von digital modulierten Hochfrequenzsignalen aufzuzeigen, das diese Nachteile vermeidet und auch eine Information über den zeitlichen Verlauf des dargestellten Signals ergibt. Außerdem ist es Aufgabe der Erfindung, eine Anordnung aufzuzeigen, mit der solche I/Q-Komponenten von digital modulierten Hochfrequenzsignalen lückenlos dargestellt werden können.

Diese Aufgabe wird erfindungsgemäß gelöst durch ein Verfahren mit den Merkmalen des Anspruchs 6 und eine Anordnung mit den Merkmalen des Anspruchs 1. Vorteilhafte Weiterbildungen ergeben-sich aus den Unteransprüchen.

Beim erfindungsgemäßen Verfahren werden die zeitlich nacheinander gemessenen I- und/oder Q-Komponenten nebeneinander graphisch auf einem Display dargestellt. Es wird also als weitere Dimension die Zeit mit graphisch dargestellt. Damit kann beispielsweise eine periodische Störung des Signals sicher erkennt werden, die auf andere Weise nicht gemessen oder in Folge ihres seltenen Auftretens nicht zuverlässig registriert werden kann. Trotzdem kann genau wie beim oben erwähnten Eye Diagramm über den Abstand der graphisch dargestellten L/Q-Komponenten die sogenannte minimale Augenöffnung gemessen werden, deren zeitlicher Verlauf graphisch dargestellt wird. Das erfindungsgemäße Verfahren eignet sich für die graphische Darstellung aller üblichen digital modulierten Hochfrequenzsignale, die durch I- oder Q- oder kombinierte I/Q-Komponenten bestimmt sind, beispielsweise für übliche quadraturamplitudenmodulierten (QAM) Signale oder für die in USA übliche Restseitenbandmodulation (z. B. 8VSB).

Zur Auswertung von Multiträger-Signalen ist es als solches aus der DE 198 51 093 A1 bekannt, die durch Demodulation gewonnenen I- und/oder Q-Komponenten der einzelnen Träger in Abhängigkeit von der Frequenz auf dem Bildschirm einer Anzeigeeinrichtung graphisch nebeneinander darzustellen. Dabei wird jeweils nur ein Bruchteil der auf einem Träger übertragenen I/Q-Werte ausgewertet. Eine Darstellung in Abhängigkeit von der Zeit ist bei diesem bekannten Verfahren nicht vorgesehen.

Die Erfindung wird im Folgenden anhand schematischer Zeichnungen an Ausführungsbeispielen näher erläutert. In der Zeichnung zeigen:
- Fig. 1: ein Prinzipschaltbild der erfindungsgemäßen Anordnung;
- Fig. 2: ein Prinzipbild des erfindungsgemäßen Verfahrens;
- Fig. 3: ein erstes Beispiel eines Meßergebnisses und
- Fig. 4: ein zweites Beispiel eines Meßergebnisses.

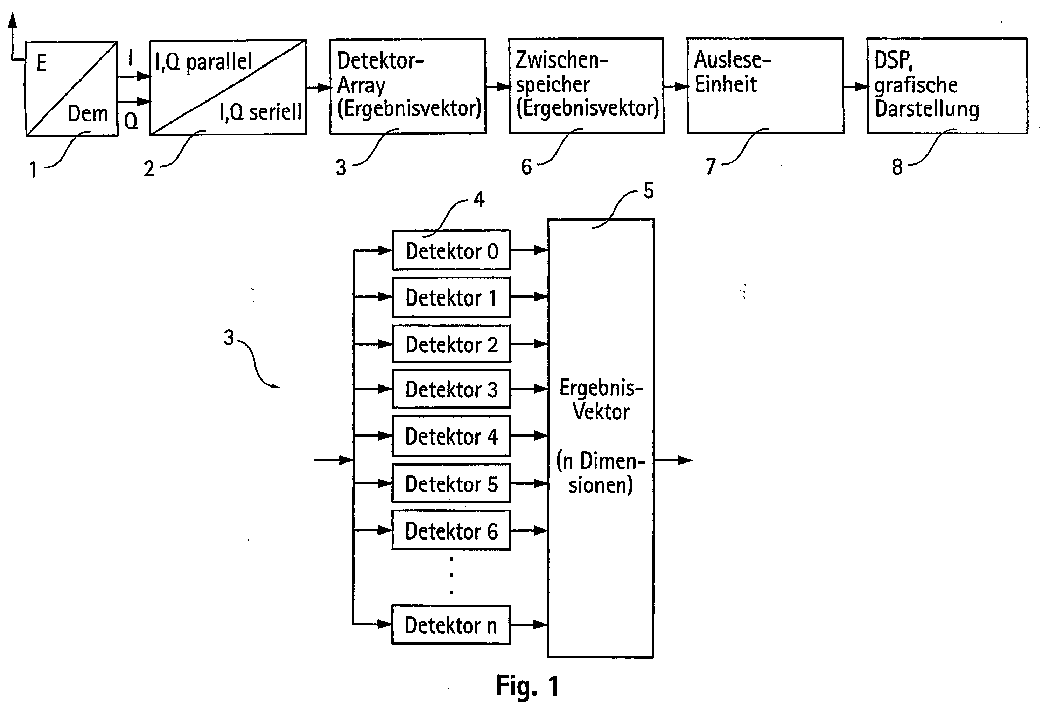

Fig. 1 zeigt das Prinzipschaltbild einer Anordnung zum Ausführen eines erfindungsgemäßen Verfahrens und zwar beispielsweise für ein 64QAM-Signal. Das QAM-modulierte Hochfrequenzsignal wird in einem I/Q-Demodulator eines Empfängers 1 demoduliert, die zeitlich nacheinander lückenlos demodulierten I/Q-Komponenten stehen parallel am Ausgang des Demodulators zur weiteren Verarbeitung zur Verfügung. In dem gezeigten Ausführungsbeispiel sollen beide Komponenten I- und Q ausgewertet werden, die parallel ankommenden I- und Q-Komponenten werden daher in einem Wandler 2 in serielle I/Q-Komponenten umgewandelt und einer Detektoreinrichtung 3 zugeführt, die aus einer Vielzahl n von parallel angeordneten Amplituden-Schwellwert-Dektoren 4 besteht, von denen jeder auf einen anderen Schwellwert 0 bis n innerhalb des Darstellungsbereiches des jeweiligen Konstellationsdiagramms, für 64 QAM also beispielsweise des Bereiches -8 bis +8 abgestimmt ist. Die Ausgänge dieser Detektoren 4 sind mit einer Abfrageeinrichtung 5 verbunden, über welche in regelmäßigen Zeitabständen von beispielsweise 100 ms der jeweilige Zustand der n Detektoren 4 abgefragt wird. Dieses Abfrageergebnis wird als digitaler Ergebniswert in einem Zwischenspeicher 6 zwischengespeichert und von dort über eine Ausleseeinrichtung 7 in regelmäßigen Zeitabständen ausgelesen und auf dem Bildschirm einer Berechnungs- und Anzeigeeinrichtung 8 (Display und digitaler Signalprozessor) graphisch dargestellt.

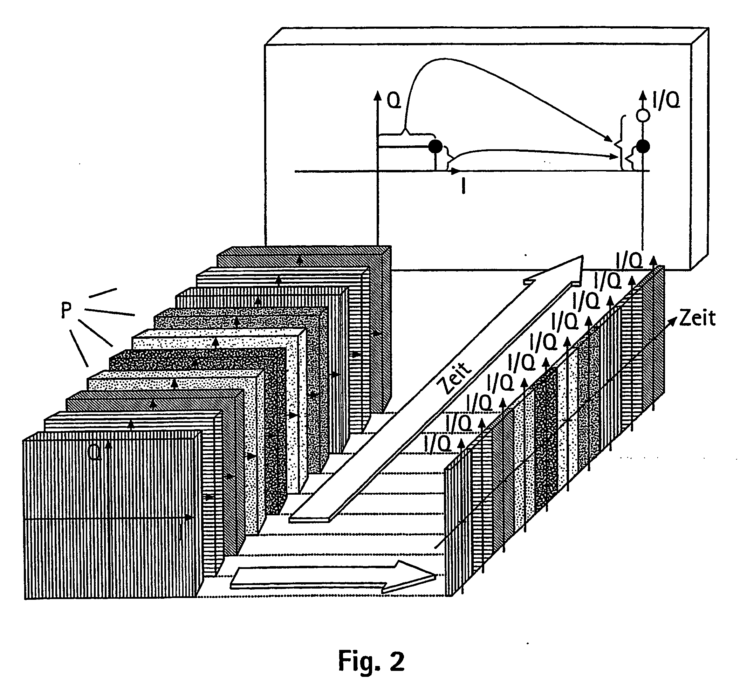

Fig. 2 zeigt schematisch das Prinzip des erfindungsgemäßen Verfahrens und zwar für ein QAM-Signal, dessen I- und Q-Komponenten ausgewertet werden sollen. Die am Ausgang des I/Q-Demodulators zeitlich hintereinander parallel ausgegebenen I- und Q-Komponenten werden zu Konstellationsdiagramm-Paketen P von beispielsweise 100 ms Länge zusammengefaßt. Die I-Komponente wird dabei im Sinne von Fig. 2 um 90° gedreht und ist daher in gleicher Richtung wie die Q-Komponente in vertikaler Richtung ausgerichtet. Es entsteht so eine eindimensionale Darstellung des Konstellationsdiagramms. Dabei geht keinerlei Information verloren. Diese eindimensionalen I/Q-Darstellungen von zeitlich hintereinander erzeugten Konstellationsdiagramm-Paketen P werden nun nebeneinander graphisch dargestellt und es kommt somit die Zeit als zusätzliche Dimension mit zur Anzeige.

Speichertechnisch wird dies mit einer Anordnung nach Fig. 1 gelöst, indem die parallelen I/Q-Komponenten im Wandler 2 in serielle Komponenten umgewandelt und der Detektoreinrichtung 3 als gleichwertige Komponenten zugeführt werden. Jeder der n Detektoren 4 stellt fest, welche der seriell zugeführten I und Q-Komponenten dem ihm zugehörigen Wert (beispielsweise 0 bis 255) entspricht. Wenn eine I- oder Q-Komponente dem jeweiligen Schwellwert eines Detektors entspricht, wird dieser aktiviert und sein Ausgang von 0 auf 1 gesetzt. Nach einer bestimmten Meßzeit von beispielsweise 100 ms wird dann über die Abfrageeinrichtung 5 festgestellt, welche der Detektoren 0 bis n während dieser Meßzeit aktiviert worden sind, das Ergebnis wird als digitaler Ergebniswert im Zwischenspeicher 6 zwischengespeichert. In diesem Ergebniswert sind also die Ergebnisse aller n Detektoren zusammengefaßt, die in den Zeitraum seit dem letzten Abfragen der Detektoren im Meßsignal aufgetreten sind. Jeder digitale Ergebniswert hat so viele binäre Ziffern wie es Detektoren gibt. Jede dieser Ziffern charakterisiert somit genau eine der möglichen I- oder Q-Komponenten.

Eine andere Möglichkeit ist, daß die Ergebniswerte mehrstellige Ziffern sind, die als Adresse eines Arrays interpretiert werden können. Jede dieser Ziffern charakterisiert wieder einen I- oder Q-Wert. Der Wert dieser Ziffern (Inhalt der Adressen) wird durch die Anzahl der seit dem Zurücksetzen der Detektoren aufgetretenen zugeordneten Meßwerte bestimmt. Jedes einzelne Ereignis inkrementiert somit den Inhalt der Adressen. Auf diese Weise ist neben dem bloßen Auftreten eines Meßwerts auch dessen Häufigkeit bekannt. Besonders vorteilhaft läßt sich diese Möglichkeit nutzen um z. B. mittels einer Farbskala die Häufigkeitsverteilung der aufgetretenen I/Q-Komponenten graphisch darzustellen.

Die im Zwischenspeicher 6 abgespeicherten Ergebniswerte werden über die Ausleseeinheit 7 ausgelesen und horizontal nebeneinander graphisch auf dem Display 8 dargestellt. Man erhält so die Augenöffnung des digital modulierten Hochfrequenzsignals und zwar in Abhängigkeit von der Zeit. Da der maximal zeitliche Darstellbereich des Displays nach kurzer Zeit erschöpft ist, muß die Zeitachse anschließend neu skaliert werden. Dazu werden die verschiedenen Ergebniswerte für die graphische Darstellung auf geeignete Weise zusammengefaßt, so daß auch in diesem Fall alle seit Beginn der Messung aufgetretenen I/Q-Komponenten erfaßt und dargestellt sind.

Die Zusammenfassung der Ergebniswerte kann auf zwei Arten geschehen.

Die Ergebniswerte werden zusammengefaßt, abgespeichert und anschließend graphisch dargestellt. Diese Methode ist sehr speichereffizient, erlaubt jedoch keine nachträgliche gedehnte Darstellung (Lupe im Zeitbereich). Die Anzahl der insgesamt maximal abzuspeichernden Ergebniswerte ist konstant, also unabhängig vom aktuell dargestellten Zeitbereich.

Eine andere Möglichkeit besteht darin, alle Ergebniswerte getrennt abzuspeichern und nur für die graphische Darstellung zusammenzufassen, ohne dabei die Ergebniswerte selbst zu verändern. Diese besonders bei langen Messungen sehr speicherintensive Methode erlaubt jedoch eine anschließende Lupendarstellung von beliebigen Stellen der Meßkurve. Der notwendige Speicherplatzbedarf ist jedoch erheblich höher.

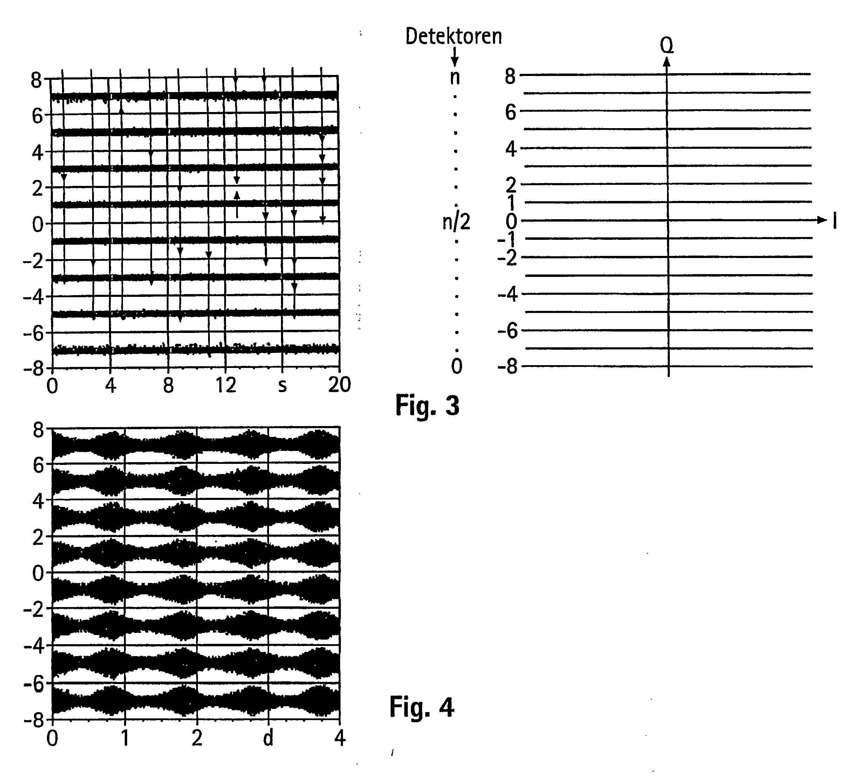

Fig. 3 zeigt das Meßergebnis für ein 64QAM-Signal mit 20 Sekunden Darstellzeit. Das Signal wurde mit 25 ns breiten Impulsen alle 2 Sekunden gestört. Alle Impulse wurden vom Gerät erfaßt (lückenlose Erfassung). Pro Impuls sind mindestens zwei gestörte Meßpunkte (I- und Q-Komponenten) sichtbar, je nachdem ob nur ein Symbol gestört worden ist oder zwei Symbole. In dem Darstellungsdiagramm nach Fig. 3 sind horizontal die vertikalen Entscheidungsfeldgrenzen des Konstellationsdiagramms (-8 bis +8) als horizontale Linien eingezeichnet. Die zu einem Ergebniswert zusammengefaßten I- und Q-Komponenten sind innerhalb der 20 Sekunden zwischen diesen Entscheidungsfeldgrenzen als Blockstreifen dargestellt, der Abstand dazwischen entspricht der beim Eye Diagramm definierten Augenhöhe. Die durch die Störimpulse erzeugten Meßpunkte sind jeweils durch die punktiert eingezeichneten Pfeile gekennzeichnet. In Fig. 3 ist den rechts dargestellten vertikalen Entscheidungsfeldgrenzen des Konstellationsdiagramms für 64QAM auch die zugehörige Anzahl n der hierbei verwendeten Detektoren gemäß Fig. 1 zugeordnet (z. B. n = 255).

Fig. 4 zeigt eine weitere Messung und Darstellung mit vier Tagen Darstellzeit. Es wird wieder ein 64QAM-Signal dargestellt, das einer Periodizität von an- und abschwellenden Störungen unterworfen ist, die von der Tageszeit abhängig sind. Ursachen können in diesem Fall z. B. EMV-Probleme oder auch Temperaturunterschiede sein. Der Abstand zwischen zwei als horizontale bauchige Linien dargestellten I- oder Q-Komponenten entspricht wieder der Augenhöhe gemäß dem Eye Diagramm.

Der darzustellende Zeitbereich kann vom Anwender in weiten Grenzen konfiguriert werden. Ein vom Anwender festgelegter Zeitbereich (z. B. 1 Stunde) wird am Display zunächst im kleinsten Zeitbereich (20 Sekunden) begonnen. Ist dieser Zeitraum erreicht, schaltet das Gerät automatisch so oft in den nächsthöheren Zeitbereich (hier: 40 Sekunden, usw.), bis schließlich der gewünschte Zeitbereich am Display dargestellt wird.

Dann wechselt die Darstellung in den sogenannten Roll-Modus, d. h. neue Meßwerte werden am rechten Rand des Displays hinzugefügt, während die ältesten Meßwerte am linken Rand gelöscht werden. So ist zu jeder Zeit der volle vom Anwender spezifizierte Zeitbereich am Display mit den aktuellen Meßwerten zu sehen. Der maximal darstellbare Zeitbereich beträgt 1000 Tage. Auch in dieser Betriebsart wird eine lückenlose Meßwerterfassung erreicht.

Im bisher beschriebenen Ausführungsbeispiel, das auf 64QAM aufbaut, wurden beide Komponenten I und Q ausgewertet und überlagert dargestellt. Selbstverständlich ist auch nur eine graphische Darstellung der I- oder Q-Komponenten allein möglich. In diesem Fall entfällt die Parallel/Seriell-Wandlung im Wandler 2 und es werden nur die I-Komponenten oder die Q-Komponenten den parallelen Detektoren 4 zugeführt. Die Auswertung und Darstellung bleibt wie oben beschrieben. Auch eine getrennte gleichzeitige Darstellung der I- und Q-Komponenten ist möglich, indem beispielsweise gemäß Fig. 2 die I-Komponente nicht direkt um 90° nach oben in Richtung der Q-Komponente gedreht wird, sondern vielmehr nach unten gedreht und anschließend verschoben wird, so daß die beiden Komponenten als getrennte horizontale Meßstreifen auf dem Display graphisch dargestellt werden.

Die in Fig. 1 dargestellte Anordnung mit einer Vielzahl von parallel angeordneten Schwellwertdetektoren ist nicht nur für das erfindungsgemäße Verfahren von Vorteil, sondern könnte auch für die klassische Konstellationsdiagrammdarstellung vorteilhaft genutzt werden, da sie eine lückenlose Auswertung aller vom Demodulator gelieferten I/Q-Meßwerte ermöglicht. Bei der klassischen Konstellationsdiagrammdarstellung wurde immer nur ein kleiner Bruchteil der tatsächlich anfallenden Meßwerte verarbeitet und dargestellt. Mit der erfindungsgemäßen Anordnung ist eine 100% lückenlose Meßwerterfassung möglich und es können auch Störungen mit sehr kurzen Impulsen registriert werden, selbst wenn nur ein einziges Symbol bei der Übertragung gestört worden ist.

## Patentansprüche

1. Anordnung zum graphischen Darstellen der I/Q-Komponenten von digital modulierten Signalen,
**gekennzeichnet durch**
einen I/Q-Demodulator (1) zum lückenlosen aufeinanderfolgenden Bestimmen der I- und/oder Q-Komponenten des darzustellenden digital modulierten Hochfrequenzsignals, dessen I- und/oder Q-Ausgang mit einer Vielzahl von parallel angeordneten Schwellwertdetektoren (4) verbunden ist, die jeweils auf unterschiedliche Schwellwerte, innerhalb des Darstellungsbereiches, der I/Q-Komponenten eingestellt sind und in denen jeweils die I/Q-Komponenten am Eingang mit diesen Schwellwerten verglichen werden und an deren Ausgängen ein binäres Signal erzeugt wird, das anzeigt, ob die eingangsseitige I/Q-Komponente über oder unter diesem Schwellwert liegt, und Mittel (5) vorgesehen sind, die mit den Ausgängen dieser Schwellwertdetektoren (4) verbunden sind und die deren Zustände in Zeitabständen abfragen und zu Ergebniswerten zusammenfassen, sowie Mittel (7), die diese Ergebniswerte auf einer Anzeigeeinrichtung (8) graphisch darstellen.

2. Anordnung nach Anspruch 1,
**dadurch gekennzeichnet,**
**daß** die Ergebniswerte zusammen mit den Entscheidungsfeldgrenzen der jeweiligen I/Q-Komponenten auf der Anzeigeeinrichtung (8) als vertikale Amplitudenwerte nebeneinander in Abhängigkeit von der Zeit graphisch dargestellt werden.

3. Anordnung nach Anspruch 1 oder 2,
**dadurch gekennzeichnet,**
**daß** die in Zeitabständen zusammengefaßten Ergebniswerte in einem Zwischenspeicher (6) abgespeichert und mittels einer Auslesevorrichtung (7) zur graphischen Darstellung auslesbar sind.

4. Anordnung nach einem der Ansprüche 1 bis 3,
**dadurch gekennzeichnet,**
**daß** nach dem Kopieren der Zustände der Detektoren (4) in den Zwischenspeicher (6) diese für eine neue Meßwerterfassung zurückgesetzt werden.

5. Anordnung nach einem der Ansprüche 1 bis 4,
**dadurch gekennzeichnete,**
**daß** zwischen dem I/Q-Demodulator (1) und den parallelen Schwellwertdetektoren (4) ein Wandler (2) angeordnet ist, durch den wahlweise nur I- oder Q-Komponenten oder I- und Q-Komponenten seriell nacheinander den Schwellwertdetektoren (4) zuführbar sind.

6. verfahren zum graphischen Darstellen der I- und/oder Q-Komponenten von digital modulierten Hochfrequenzsignalen mit einer Anordnung nach einem der Ansprüche 1 bis 5,
**dadurch gekennzeichnet,**
**daß** die zeitlich nacheinander gemessenen I- und/oder Q-Komponenten in Abhängigkeit von der Zeit nebeneinander graphisch dargestellt werden.

7. Verfahren nach Anspruch 6 zum gleichzeitigen graphischen Darstellen der I- und Q-Komponenten von digital modulierten Hochfrequenzsignalen,
**dadurch gekennzeichnet,**
**daß** die I- und Q-Komponenten eindimensional in Abhängigkeit von der Zeit nebeneinander graphisch dargestellt werden.

8. Verfahren nach Anspruch 6 oder 7,
**dadurch gekennzeichnet,**
**daß** die I/Q-Komponenten zeitlich nacheinander lückenlos gemessen und in Abhängigkeit von der Zeit nebeneinander graphisch dargestellt werden.

9. Verfahren nach einem der Ansprüche 6 bis 8,
**dadurch gekennzeichnet,**
**daß** jeweils eine Mehrzahl der zeitlich aufeinanderfolgenden I/Q-Komponentenwerte zu Ergebniswerten zusammengefaßt werden und diese zeitlich aufeinanderfolgenden Ergebniswerte graphisch nebeneinander auf einem Display dargestellt werden.

## Claims

1. Arrangement for the graphic representation of the I/Q-components of digitally-modulated signals,
**characterised by**
an I/Q-demodulator (1) for a seamless, successive determination of the I and/or Q components of the digitally-modulated, high-frequency signal to be represented, of which the I-output and/or Q-output is connected to a large number of threshold detectors (4) arranged in parallel, which are each adjusted to different threshold values within the display range for the I/Q-components, and in which the I/Q components at the input are compared respectively with the latter threshold values, and at the outputs of which a binary signal is generated, which indicates whether the input-end I/Q component is disposed above or below this threshold value, and means (5) are provided, which are connected to these threshold detectors (4) and which scan their statuses at time intervals and collate them to form result values, together with means (7), which represent these result values graphically on a display device (8).

2. Arrangement according to claim 1
**characterised in that**
the result values are represented graphically together with the decision-field boundaries of the relevant I/Q-components on the display device (8) side by side as vertical amplitude values in dependence upon time.

3. Arrangement according to claim 1 or 2
**characterised in that**
the result values collated at time intervals are stored in a buffer memory (6) and can be read out by means of a reader (7) for graphic representation.

4. Arrangement according to any one of claims 1 to 3,
**characterised in that**,
after the statuses of the detectors (4) have been copied into the buffer memory (6), these can be reset for the registration of a new measured value.

5. Arrangement according to any one of claims 1 to 4,
**characterised in that**,
a converter (2), by means of which, optionally, only the I component or only the Q component is supplied successively in series to the threshold detectors (4), is arranged between the I/Q-demodulator (1) and the parallel threshold detectors (4).

6. Method for the graphic representation of the I component or Q component of digitally-modulated, high-frequency signals with an arrangement according to any one of claims 1 to 5,
**characterised in that**
the I and/or Q components measured in temporal succession are represented graphically side by side in dependence upon time.

7. Method according to claim 6 for the simultaneous graphic representation of I and Q components of digitally-modulated, high-frequency signals,
**characterised in that**
the I and Q components measured in temporal succession are represented graphically side by side in one dimension in dependence upon time.

8. Method according to claim 6 or 7,
**characterised in that**
the I/Q-components are measured seamlessly in temporal succession and represented graphically side by side in dependence upon time.

9. Method according to any one of claims 6 to 8,
**characterised in that**,
in each case, a large number of I/Q-components in temporal succession are collated to provide result values, and that these result values are represented in temporal succession graphically side by side on a display.

## Revendications

1. Dispositif de représentation graphique des composantes I/Q de signaux modulés de façon numérique, **caractérisé par** un démodulateur I/Q (1) pour la détermination successive sans lacunes des composantes I et/ou Q du signal haute fréquence modulé de façon numérique à représenter, dont la sortie I et/ou Q est reliée à une pluralité de détecteurs de valeurs de seuil disposés parallèlement (4) qui sont réglés à chaque fois à des valeurs de seuil différentes à l'intérieur de la zone de représentation des composantes I/Q, et dans lesquels sont comparés à chaque fois les composantes I/Q à l'entrée avec ces valeurs de seuil, et aux sorties desquels est produit un signal binaire qui indique si la composante I/Q côté entrée se situe au-dessus ou en dessous de cette valeur de seuil, et des moyens (5) sont prévus qui sont reliés aux sorties de ces détecteurs de valeurs de seuil (4) et qui interrogent les états de ceux-ci à des intervalles et les réunissent en valeurs de résultat, ainsi que des moyens (7) qui représentent graphiquement ces valeurs de résultat sur une installation d'affichage (8).

2. Dispositif selon la revendication 1,
**caractérisé en ce que**
les valeurs de résultat, ensemble avec les limites des champs de décision des composantes I/Q respectives sont représentées sur l'installation d'affichage (8) comme valeurs d'amplitude verticales les unes à côté des autres en fonction du temps.

3. Agencement selon la revendication 1 ou 2,
**caractérisé en ce que**
les valeurs de résultat réunies à des intervalles sont stockées dans une mémoire intermédiaire (6) et peuvent être lues au moyen d'un dispositif de lecture (7) en vue de la représentation graphique.

4. Dispositif selon l'une des revendications 1 à 3,
**caractérisé en ce qu'**après le copiage des états des détecteurs (4) dans la mémoire intermédiaire (6), ceux-ci sont remis à l'état initial en vue d'une nouvelle détection de valeurs de mesure.

5. Dispositif selon l'une des revendications 1 à 4,
**caractérisé en ce que**
entre le démodulateur I/Q (1) et les détecteurs de valeurs de seuil parallèles (4), un convertisseur (2) est disposé par lequel peuvent être amenées sélectivement seulement des composantes I ou Q ou des composantes I et Q d'une manière sérielle successivement aux détecteurs de valeurs de seuil (4).

6. Procédé de représentation graphique des composantes I et/ou Q de signaux haute fréquence modulés de façon numérique avec un dispositif selon l'une des revendications 1 à 5,
**caractérisé en ce que**
les composantes I et/ou Q mesurées successivement dans le temps sont représentées graphiquement les unes à côté des autres en fonction du temps.

7. Procédé selon la revendication 6 pour la représentation graphique simultanée des composantes I et Q de signaux haute fréquence modulés de façon numérique,
**caractérisé en ce que**
les composantes I et Q sont représentées graphiquement les unes à côté des autres de manière unidimensionnelle en fonction du temps.

8. Procédé selon la revendication 6 ou 7,
**caractérisé en ce que**
les composantes I/Q sont mesurées successivement dans le temps sans lacunes et sont représentées graphiquement les unes à côté des autres en fonction du temps.

9. Procédé selon l'une des revendications 6 à 8,
**caractérisé en ce que**
respectivement une pluralité des valeurs de composante I/Q se suivant successivement dans le temps sont réunies en des valeurs de résultat, et ces valeurs de résultat qui se suivent dans le temps sont représentées graphiquement les unes à côté des autres sur un écran d'affichage.
